# EUROPEAN PATENT SPECIFICATION

(11) **EP 4 507 095 B1**
(45) Date of publication and mention of the grant of the patent: **06.05.2026**
(21) Application number: 23905336.6
(22) Date of filing: 13.09.2023
(51) Int. Cl.: H01M 50/244, H01M 50/271, H01M 50/289, H01M 50/267, H01M 50/24, H01M 50/204, H01M 50/505

(54) **BATTERY PACK CASE AND BATTERY PACK**
BATTERIEPACKGEHÄUSE UND BATTERIEPACK
BOÎTIER DE BLOC-BATTERIE ET BLOC-BATTERIE

(30) Priority: 19.12.2022 CN 202223426597 U
(43) Date of publication of application: 12.02.2025
(73) Proprietor: Zhuhai Cosmx Power Co., Ltd., Zhuhai, Guangdong 519180 (CN)
(72) Inventor: WEI, Yixing, Zhuhai, Guangdong 519180 (CN); LUO, Zihao, Zhuhai, Guangdong 519180 (CN); ZENG, Sihan, Zhuhai, Guangdong 519180 (CN)
(74) Representative: Murgitroyd & Company
(86) International application number: PCT/CN2023/118584
(87) International publication number: WO 2024/131159

(56) References cited:
- CN-U- 205 657 093
- CN-U- 212 967 840
- CN-U- 212 967 840
- CN-U- 216 085 080
- CN-U- 217 361 856
- CN-Y- 2 373 898
- KR-A- 20220 068 648
- US-A1- 2002 182 480
- US-A1- 2011 076 555
- US-A1- 2015 228 936
- US-A1- 2018 040 863
- US-A1- 2018 183 023
- US-B2- 10 309 826

## Description

### TECHNICAL FIELD

The present application relates to the field of battery technologies, and in particular, to a battery pack.

### BACKGROUND

In recent years, with the rapid development of mobile communication industries and electronic products, polymer lithium-ion batteries have been widely used due to a variety of obvious advantages such as large capacity, a small volume, high safety, low cost and the like. For example, notebook computers mainly use a lithium-ion polymer battery.

A conventional notebook computer battery includes a polymer cell, a battery protection plate, a plastic frame body and a cover plate of a protection plate and the like. The cover plate of the protection plate is fixed to the frame body in a snap-fit manner, and there are some defects in this manner. For example, in this manner, a snap fit force of a simple buckle is insufficient, while a complex buckle will significantly occupy a space of a battery pack case, which requires the battery pack case to be made relatively large to avoid occupying a space of a battery protection plate and other components. In addition, the complex buckle will improve design and processing cost of an injection mold.

KR1020220068648A discloses an assembly structure of a battery module casing. The assembly structure of the battery module casing is a box-shaped assembly structure for accommodating a plurality of battery cells by assembling a casing, a cover, and two end plates on both sides together. Two ends of a bottom plate of the casing are bent upward at a right angle to form two side plates. Snap-fit grooves are formed on inner side surfaces of top portions of the two side plates along a longitudinal direction. The cover is snapped into place by inserting both of its side ends into the snap-fit grooves formed on the two side plates of the casing. Assembly is completed by performing laser welding on corner portions between the inner surface of the top portion of each side plate of the casing and an upper surface on the two side ends of the cover.

CN212967840U discloses a power battery. The power battery includes a top cover and a housing. The housing has a structure with one end having an opening. A step is provided on an inner wall of the housing. The step is arranged around the inner wall of the housing. A groove is provided on a side of the step close to the inner wall of the housing. The top cover is mounted on the opening. The top cover abuts against the step and covers the groove. The top cover is welded to the housing. In the aforementioned power battery, the step is provided on the inner wall of the housing. The step is arranged around the inner wall of the housing. The groove is provided on the side of the step close to the inner wall of the housing. The top cover is mounted on the opening. The top cover abuts against the step and covers the groove. The top cover is welded to the housing. The step can avoid laser leakage during laser welding of the top cover and the housing, and thereby preventing the laser from reaching internal structures during, thereby preventing an internal structure of the battery from being burned. Simultaneously, the groove on the step can receive welding spatter generated during the laser welding process, thereby preventing the welding spatter from falling into the housing. Consequently, the insulation and safety performance of the battery are effectively enhanced.

US 2015/0228936 Al discloses a prismatic secondary battery includes a battery case in a prismatic shape and a battery cover which seals up an opening part of the battery case. The battery cover has a convex part which projects toward the inside of the battery case, faces an inner surface of a side wall part of the battery case, and extends continuously along the entire periphery of the side wall part. Cover thickness of a contact part of the battery cover which is in contact with the upper end of the side wall part of the battery case at a position outside the convex part is greater than 14 of cover thickness of a blockage part blocking up an opening part at a position inside the convex part and is less than the cover thickness of the blockage part.

US 2002/182480 A1 discloses a pack for batteries, such as capacitors, is designed for ease of manufacture and installation of components in the case with vertical motions to provide an efficient and cost-effective assembly. An exemplary embodiment has a molded case and cover in which all of the internal components are installed in the case through the open top without requiring fasteners, tools, or additional supporting parts. The components include a flexible circuit on a flexible plastic sheet carrying control and sensor circuitry and temperature sensors together with internal and external connectors. Buss bars and connecting terminals mount in vertical slots and include prongs that extend through flexible flap connectors into guide recesses to provide connections to the flexible circuit. Batteries with vertical blade terminals are received in slots of the buss bars. An electronic control module and current sensor are also provided.

US 10,309,826 B2 discloses a sensor device includes a body case provided with an opening, and a body cover assembled to the body case to cover the opening. The body cover has at an outer peripheral portion thereof an overlapping region overlapping a portion of the body case located at a peripheral edge of the opening. The body cover is fixed to the body case by providing a welded portion surrounding the opening using laser-welding at a portion distant from an end surface of the body cover in a boundary of the overlapping region of the body cover and a portion of the body case overlapping the overlapping region.

US 2018/0183023 Al discloses a housing of battery module and a battery module. The housing includes a lower shell, an upper cover and two output components, the lower shell includes a lower shell body and at least one connecting member; the lower shell body is separated into accommodating chambers for accommodating bare cell; an installation site for connecting member is provided in each accommodating chamber; every two adjacent accommodating chambers are provided with one connecting member between and penetrating through the every two adjacent accommodating chambers; an installation site for output component and an output hole are provided in each of a first one and a last one of the plurality of accommodation chambers; the two output components are sealedly connected with two output holes, respectively. The battery module includes bare cells and the housing.

### SUMMARY

The present application provides a battery pack which facilitate the positioning and installation of a cover plate of a protection plate, and a space occupied thereof in the battery pack case is effectively reduced.

The present application provides a battery pack including cells, a protection plate and a battery pack case. The battery pack case includes a frame body and a cover plate. The frame body includes partition strips, and the frame body is provided with an accommodating position for a protection plate defined by the partition strips. The cover plate is assembled on an upper opening of the accommodating position for the protection plate. The partition strips are provided with first protrusions and second protrusions at a top end thereof, and the second protrusions are located on an outer side of the first protrusions and are higher than the first protrusions. An edge of the cover plate is limited to inner sides of the second protrusions and is supported on the first protrusions, and a lower end of the edge of the cover plate is fixedly connected to upper ends of the first protrusions in a manner of laser welding. The protection plate is disposed in the accommodating position for the protection plate, the cells are disposed in the accommodating positions for the cells of the battery pack case, and the cells are electrically connected to the protection plate. The battery pack also includes a label and a polycarbonate sheet (PC), the label wraps an outer surface of the battery pack case, and the PC sheet is adhered to a bottom surface of the battery pack case.

In some embodiments, the first protrusions and/or the second protrusions are continuously disposed on the partition strips.

In some embodiments, a plurality of the first protrusions and/or a plurality of the second protrusions are discretely disposed on the partition strips.

In some embodiments, the frame body is further provided with a plurality of accommodating positions for cells. The plurality of the accommodating positions for the cells are arranged in a left-right side-by-side manner, and the accommodating position for the protection plate is located at a rear side of the plurality of the accommodating positions for the cells and stretches across the plurality of the accommodating positions for the cells.

Optionally, a front side section of the partition strips is provided with at least one communication groove, and the front side section is a portion of the partition strips located between the accommodating position for the protection plate and the plurality of the accommodating positions for the cells.

Optionally, the at least one communication groove includes N communication grooves, the plurality of the accommodating positions for the cells include N accommodating positions for the cells, and the N communication grooves are in one-to-one correspondence with the N accommodating positions for the cells, wherein N is an integer greater than 1.

Optionally, a portion of the front side section without the communication groove is provided with the first protrusions.

In some embodiments, in a case that the cover plate is supported on upper surfaces of the first protrusions, before welding, an upper surface of the cover plate is higher than an upper end of the second protrusions.

In some embodiments, after welding, a height difference between the upper surface of the cover plate and the upper end of the second protrusions is less than 0.02 mm.

In some embodiments, a longitudinal section of the first protrusions is trapezoidal, and a groove is provided between the first protrusions and the second protrusions.

In some embodiments, an edge of a rear side of the cover plate is provided with a positioning strip protruding downwards, and a height of the positioning strip is greater than a height of the first protrusions. When the cover plate is supported on an upper surface of the first protrusions, the positioning strip abuts against and fits with an inner side of the first protrusions.

In some embodiments, at least one partition groove is provided on the first protrusions, so that a sinking depth of the cover plate after the laser welding of the frame body and the cover plate.

In some embodiments, on a side edge section of the partition strips, an embedding groove is provided between the first protrusions and the second protrusions, the side edge section is a portion of the partition strips located at a left side and a right side of the accommodating position for the protection plate. A left side and a right side of the cover plate are provided with ribs in a protruding manner, and the ribs fit with the embedding groove. When the cover plate is assembled on an upper end opening of the accommodating position for the protection plate, the ribs are embedded into the embedding groove.

According to technical solutions provided in the present application, the cover plate is fixed to the frame body in the manner of welding, so that a problem that a space in the frame body is occupied caused by additionally providing a buckle may be solved, and thus ensuring that the accommodating position for the protection plate meets a required size for accommodating the protection plate, and cost increase is capable of being avoided at the same time. In addition, by disposing the second protrusions higher than the first protrusions, a limiting function may be formed on the cover plate supported on the first protrusions. According to the technical solutions of the present application, a joining manner of the frame body and the cover plate of the battery pack case is improved, and the space in the battery pack case occupied by additionally providing the buckle may be effectively reduced, so that the protection plate with a larger size may be accommodated. Meanwhile, a production efficiency of the battery pack is improved, and a production cost of the battery pack is reduced. In addition, the battery pack case made by the manner of laser welding has a better waterproof performance, which is beneficial to improvement of product quality of the battery pack.

### BRIEF DESCRIPTION OF THE DRAWINGS

In order to illustrate the embodiments of the present application more clearly, the following will briefly describe the drawings which are required to be used in the description of the embodiments.
FIG. 1 is a schematic exploded structural diagram of a battery pack case according to an embodiment of the present application.
FIG. 2 is a schematic cross-sectional view taken along a A-A plane in FIG. 1.
FIG. 3 is a schematic cross-sectional view taken along a B-B plane in FIG. 1.
FIG. 4 is a schematic diagram of an exploded structure of a battery pack according to an embodiment of the present application.

### DETAILED DESCRIPTION OF THE EMBODIMENTS

Specific implementations of the present application are further described below with reference to the drawings. For ease of description, orientations in the present application are defined with reference to the drawings, for example, "front side", "rear side", "left side", "right side", "above", "below", "upper end" and "lower end" and the like and the definitions of these orientations are merely for the convenience of clearly describing a relative positional relationship and are not used for limiting an actual orientation of products or apparatuses in processes of production, use, sales and the like.

In addition, terms "first" and "second" are merely used for descriptive purposes and cannot be understood as indicating or implying relative importance or implicitly indicating the number of the indicated technical features.

In addition, in the embodiments of the present application, terms such as "install", "arrange", "connect" and "fix" and the like should be understood in a broad sense unless explicitly specified and limited otherwise, for example, it may be a fixed connection, a detachable connection, or a whole; and may be directly connected or indirectly connected by using an intermediate medium. For a person having ordinary skill in the art, the specific meanings of the above-mentioned terms in the present application may be understood according to specific situations.

The specific implementations of the present application are further described below with reference to the drawings. The relative orientations involved in the description of the present application may refer to the directions indicated by the arrows in each figure.

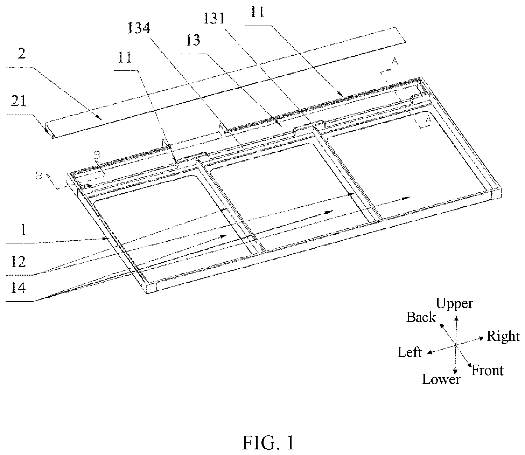

As shown in FIG. 1, the present embodiment provides an exemplary battery pack case. The battery pack case includes a frame body 1 and a cover plate 2. The frame body 1 includes partition strips 11, and the frame body 1 is provided with accommodating spaces defined by the partition strips 11. The partition strips 11 include partition strips along a left-right direction and partition strips along a front-back direction, and the accommodating spaces include an accommodating position for a protection plate13 and accommodating positions 14 for cells.

Illustratively, in the present embodiment, the accommodating position for the protection plate 13 and the accommodating positions for the cells 14 are all rectangle, the number of the accommodating positions for the cells 14 is three, and the accommodating positions for the cells 14 are arranged in a left-right side-by-side manner. The accommodating position for the protection plate 13 is located at a rear side of the three accommodating positions for the cells 14 and stretches across the three accommodating positions for the cells 14.

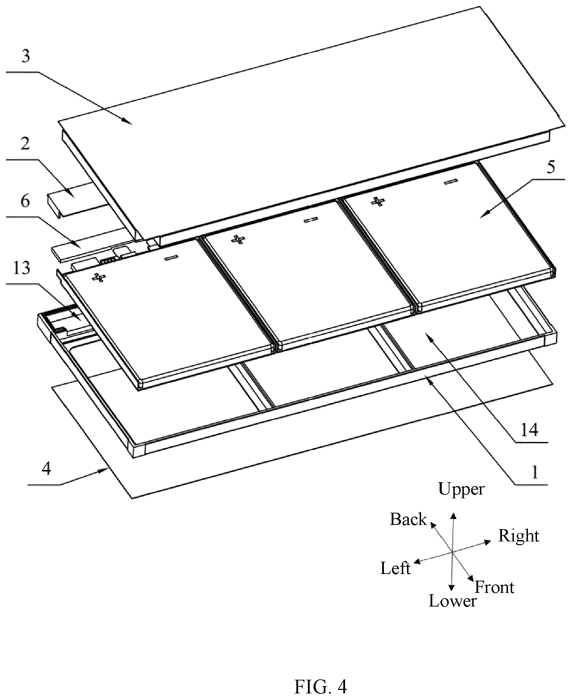

Referring to FIG. 4, each accommodating position for the cell 14 is use for accommodating one cell 5, the accommodating position for the protection plate 13 is used for accommodating the protection plate 6, and the protection plate 6 is used for detecting and protecting each cell 5. The cover plate 2 is assembled above the accommodating position for the protection plate13, and is aimed at sealing an upper end opening of the accommodating position for the protection plate 13, so that the protection plate 6 is packaged in the accommodating position for the protection plate 13.

In order to avoid the arrangement of a buckle structure while facilitating the assembly of the cover plate 2, the battery pack case provided in the embodiment of the present application adopts a new assembly structure.

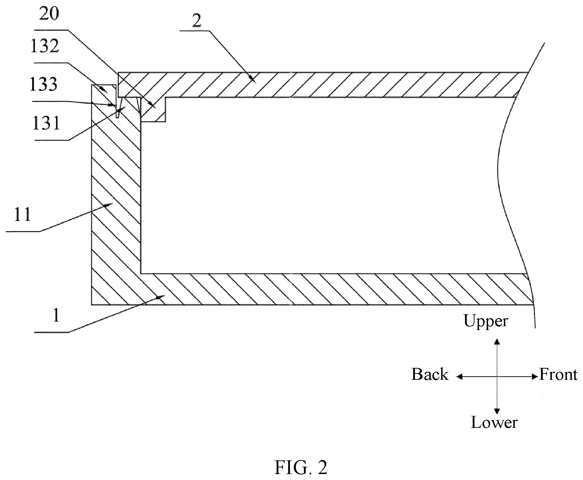

As shown in FIG.1 and FIG. 2, in the battery pack case provided in the embodiment of the present application, the frame body 1 includes partition strips 11, and the frame body 1 is internally provided with an accommodating position for a protection plate 13 defined by the partition strips 11. The partition strips 11 are provided with first protrusions 131 and second protrusions 132 at a top end thereof, and the second protrusions 132 are located at outer sides of the first protrusions 131 and are higher than the first protrusions131. An edge of the cover plate 2 is limited to inner sides of the second protrusions 132 and is supported on the first protrusions 131. A lower end of the edge of the cover plate 2 is fixedly connected to upper ends of the first protrusions 131 in a manner of laser welding.

Based on the above-mentioned arranging manner provided in the embodiments of the present application, the cover plate is capable of being directly connected to the frame body in the welding manner, so that the structure is simple and easy to be implemented, and additional components such as a buckle do not need to be adopted. Therefore, a space in the frame body is prevented from being occupied by the additional components, thereby it may be ensured that the space in the frame body is sufficient, and thus the size required for placing the protection plate is achieved. At the same time, the cost increase caused by providing additional component may also be avoided.

Optionally, in some embodiments, the first protrusions or the second protrusions are continuously disposed on the partition strips 11, that is, around the accommodating position for the protection plate 13, the first protrusions 131 may be continuously disposed on the partition strips 11, or may be disposed merely on a portion section of the partition strips 11. For example, the partition strips 11 may be provided with one longer first protrusion 131 merely.

Consequently, the cover plate 2 may have a longer continuous contact area with the frame body 1 during welding, thereby facilitating improving welding strength between the frame body 1 and the cover plate 2, and thus reliability of the battery pack case is improved.

Optionally, in some embodiments, the second protrusion 132 may also be continuously disposed on the partition strips 11, that is, around the protection plate accommodating position 13, the second protrusion 132 may be continuously disposed on the whole of the partition strips 11, or may be disposed merely on a portion section of the partition strips 11. For example, the partition strips 11 may be provided with merely one longer second protrusion 132.

In another embodiments, the first protrusion 131 and/or the second protrusion 132 may also be discretely disposed on the partition strips 11.

For example, the partition strips 11 may be provided with a plurality of the first protrusions 131, and lengths of the plurality of first protrusions 131 may be the same or different. By this arrangement, a welding position of the frame body 1 and the cover plate 2 is capable of being designed more flexibly, and it is beneficial to save operation time and cost spent in the welding.

For another example, the partition strips 11 may be discretely provided with a plurality of the second protrusions 132, and lengths of the plurality of second protrusions 132 may be the same or different. By this arrangement, it is beneficial to reduce the usage amount of a material and the lightweight of the battery pack.

As shown in FIG. 1 and FIG. 2, in the battery pack case provided in the embodiment of the present application, the frame body 1 is further provided with a plurality of accommodating positions for cells 14. The plurality of the accommodating positions for the cells 14 are arranged in a left-right side-by-side manner, and the accommodating positions for the protection plate 13 is located at a rear side of the plurality of the accommodating positions for the cells 14 and stretches across the plurality of accommodating positions for cells 14. That is, in a direction in which the plurality of the accommodating positions for cells 14 are arranged in a side-by-side manner, a length of the accommodating position for the protective plate 13 is equal to or substantially the same as a sum of lengths of the plurality of the accommodating positions for the cells 14. Consequently, the battery pack may have a stable structure after being assembled to make the electrical connection between the cells and the protection plate has sufficient reliability.

Illustratively, as shown in FIG. 1, the frame body 1 may include partition strips for cells 12, and the accommodating position for the cells 14 are limited by the partition strips for the cells 12 and the partition strips 11.

In some embodiments, as shown in FIG. 1, the first protrusions 131 and the second protrusions 132 may be disposed on portions of the partition strips 11 located at a rear side, a left side and a right side of the accommodating position for the protection plate 13, and a front side section of the partition strips 11 (which is, the portion of the partition strip located between the protection plate receiving position 13 and the cell accommodating position 14) is merely provided with the first protrusion 131.

To be specific, in the present embodiment, the front side section of the partition strips 11 is provided with at least one communication groove 134. When the cells 5 and the protection plate 6 are arranged, the communication groove 134 may be served as an electrical connection channel of a corresponding terminal between the cell 5 and the protection plate 6.

Preferably, in some embodiments, the number of the communication grooves 134 disposed on the front side section of the partition strips 11 may be equal to the number of the accommodating positions for the cells 14, and a position of each communication groove 134 corresponds to one accommodating position for the cell 14 for electrical connection lines of the cells in the corresponding accommodating position for the cell 14 to pass through.

For example, N communication grooves 134 are provided in the front side section of the partition strips 11, N accommodating positions for the cells 14 are provided in the battery pack case, and the N communication grooves 134 are in one-to-one correspondence with the N accommodating positions for the cells 14, where the N is an integer greater than 1. Illustratively, in the embodiment shown in the FIG.1, the N is 3, that is, three communication grooves 134 are provided on the front side section of the partition strips 11, three accommodating positions for the cells 14 are provided in the battery pack case, and the three communication grooves 134 are in one-to-one correspondence with the three accommodating positions for the cells 14 in a front-back direction.

In the embodiment of the present application, as shown in FIG. 2, a height of the second protrusion 132 is greater than a height of the first protrusion 131, and the height difference ranges from 0.1 to 0.5 mm. In this way, it may be ensured that when the cover plate 2 is supported on the first protrusion 131, the second protrusion 132 may play a limiting function on an edge of the cover plate 2, so that the cover plate 2 is accurately positioned on an upper surface of the first protrusion 131 and is located on an inner side of the second protrusion 132. Meanwhile, in a process of laser welding of the cover plate 2 and the frame body 1, the cover plate 2 is prevented from moving position.

Optionally, the height of the second protrusion 132 may be greater than the height of the first protrusion 131 in a local section of the partition strips 11. For example, the height of the second protrusion 132 on a rear side section of the partition strips 11 (that is, the portion located on the rear side of the accommodating position for the protection plate 13) may be greater than the height of the first protrusion 131. Consequently, a preparation process may be simplified, so that requirements for preparation precision may be reduced.

In the process of laser welding of the cover plate 2 and the frame body 1, in order to melt through the cover plate 2 to make the first protrusion 131 sink and be welded with each other into a whole, preferably, when the cover plate 2 is placed on the upper surface of the first protrusion 131 (when welding is not performed), an upper surface of the cover plate 2 protrudes from an upper end of the second protrusion 132. For example, a height difference between the two may be 0.3 mm. In this way, it may be ensured that the upper surface of the cover plate 2 after the welding and an upper surface of the second protrusion 132 of the frame body 1 are basically located at a same plane, and the heights are basically consistent. Therefore, surface flatness of the battery pack case is good, and the structural strength is higher. For example, it may be controlled that the height difference between the two after the welding may be controlled to be less than 0.02 mm.

Optionally, in an embodiment of the present application, as shown in FIG. 2, a longitudinal section of the first protrusion 131 may be trapezoidal, a groove 133 is provided between the first protrusion 131 and the second protrusion 132, and the groove 133 gradually becomes narrow from top to bottom. This arrangement may ensure that in the process of laser welding of the cover plate 2 and the frame body 1, deformation and the like generated on the second protrusion 132 caused by heat conduction or pulling due to deformation is avoided. Illustratively, the height of the first protrusion 131 may range from 0.1 mm to 1 mm, and a width of the widest portion of the groove 133 is less than or equal to 0.1 mm.

Preferably, the above-mentioned arrangement may be performed merely in the local section of the partition strips 11. For example, the longitudinal section of the first protrusion 131 on the rear section of the partition strips 11 may be trapezoidal, and the groove 133 gradually becomes narrow from top to bottom between the first protrusion 131 and the second protrusion 132. Consequently, the preparation process is simplified, and the requirements for the preparation precision is reduced.

Optionally, in an embodiment of the present application, as shown in FIG. 2, an edge of a rear side of the cover plate 2 is provided with a positioning strip 20 protruding downwards, and a height of the positioning strip 20 is greater than a height of the first protrusion 131. For example, a height difference between the positioning strip 20 and the first protrusion 131 may range from 0.2 mm to 0.5 mm. In this way, when the cover plate 2 is supported on an upper surface of the first protrusion 131, the positioning strip 20 abuts against and fits with an inner side of the first protrusion 131, which plays a positioning function and prevents residue generated in the process of the laser welding may be prevented from falling into the accommodating position for the protection plate 13, so that the adverse influence of the assembly process of the cover plate 2 on the protection plate 6 may be effectively avoided.

Optionally, in the embodiment of the present application, at least one partition groove 1311 is provided on the first protrusions 131, and the partition groove 1311 arranged in this way is capable of limiting a sinking depth of the cover plate 2 after the laser welding of the frame body 1 and the cover plate 2. That is, in the process of the welding, when the cover plate 2 descends to be in contact with a bottom surface of the partition groove 1311, a supporting surface of the first protrusion 131 on the cover plate 2 becomes larger, so that a supporting force is increased, so that resistance of continuing welding downwards becomes larger, and at this time, it is not continued welding downwards. Consequently, consistency of a size of the battery pack case may be effectively ensured.

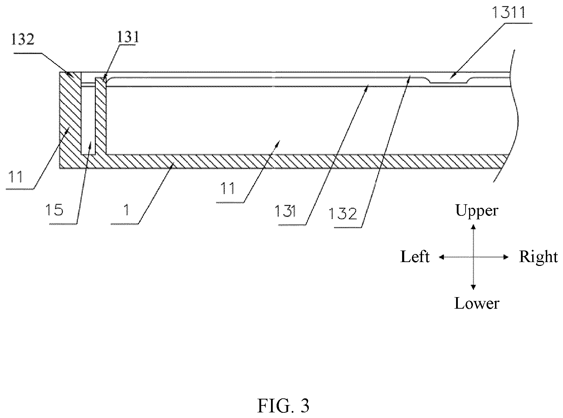

For example, as shown in FIG. 3, the partition groove 1311 may be disposed on a rear side section of the partition strips 11. The partition groove 1311 may be a U-shaped groove or other types of grooves, as long as the partition groove 1311 has a relative flat bottom surface, which is not limited in the embodiments of the present application.

Optionally, in the embodiment of the present application, as shown in FIG. 1 and FIG. 3, the first protrusion 131 and the second protrusion 132 may also be provided on the side edge section of the partition strips 11 (that is, the portion located on the left and right sides of the protection plate accommodating position 13), the embedding groove 15 is provided between the first protrusion 131 and the second protrusion 132, and the left end and the right end of the cover plate 2 protrude and provide ribs 21 matching the embedding groove 15. When the cover plate 2 is installed at an upper opening of the protection plate accommodating position, the ribs 21 are embedded into the embedding groove 15 so as to achieve matching. In this way, it can be ensured that the cover plate 2 is accurately positioned on the upper surface of the first protrusion 131, and in the welding process of the cover plate 2 and the frame body 1, the cover plate 2 is prevented from moving the position.

As shown in FIG. 4, an embodiment of the present application further provides a battery pack. The battery pack includes the battery pack case described above, and further includes a label 3, a polycarbonate (PC) sheet 4, cells 5 and a protection plate 6 connected to the cells 5. Since the battery pack case described above is adopted, the battery pack provided in the present embodiment may accommodate a protection plate 6 with a larger size.

The protection plate 6 is disposed in the accommodating position for the protection plate 13, and the cells 5 is disposed in the accommodating positions for the cells 14. The label 3 wraps an outer surface of the battery pack case, and the PC sheet 4 is adhered to a bottom surface of the battery pack case.

The present application provides an exemplary manufacturing method for a battery pack. The method includes:
welding cells 5 to corresponding terminals of a protection plate 6;
placing the cells 4 in accommodating positions for the cells 14, and placing the protection plate 6 in an accommodating position for a protection plate 13;
embedding ribs 21 at two ends of the cover plate 2 into embedding grooves 15 disposed on two sides of the accommodating position for the protection plate 13 for preliminarily assembling;
placing the preliminarily assembled cover plate 2 and a frame body 1 into a jig of a laser device, adjusting a laser power to a value ranging from 40 W to 60 W, setting a scanning speed to be 1000 mm/s and a scanning frequency to be 10 times, then starting an automatic laser welding operation, and welding edges of the cover plate 2 with the first protrusion 131;
wrapping a battery by a label 3, and adhering a PC sheet 4 to a bottom surface of the battery pack case, and then completing assembly of the battery pack.

It should be understood that the above content is preferred embodiments of the present application and not all embodiments of the present application.

## Claims

1. A battery pack, comprising cells (5), a protection plate (6) and a battery pack case, wherein
the battery pack case comprises a frame body (1) and a cover plate (2),
the frame body (1) comprises partition strips (11), and the frame body (1) is provided with an accommodating position for a protection plate (13) defined by the partition strips (11);
the cover plate (2) is assembled on an upper opening of the accommodating position for the protection plate (13);
the partition strips (11) are provided with first protrusions (131) and second protrusions (132) at a top end thereof, and the second protrusions (132) are located on an outer side of the first protrusions (131) and are higher than the first protrusions (131); and
an edge of the cover plate (2) is limited to inner sides of the second protrusions (132) and is supported on the first protrusions (131), and a lower end of the edge of the cover plate (2) is fixedly connected to upper ends of the first protrusions (131) in a manner of laser welding;
the protection plate (6) is disposed in the accommodating position for the protection plate (13), the cells (5) are disposed in the accommodating positions for the cells (14) of the battery pack case, and the cells (5) are electrically connected to the protection plate (6); **characterized in that**,
the battery pack further comprises a label (3) and a polycarbonate (PC) sheet (4), the label (3) wraps an outer surface of the battery pack case, and the PC sheet (4) is adhered to a bottom surface of the battery pack case.

2. The battery pack according to claim 1, wherein the first protrusions (131) and/or the second protrusions (132) are continuously disposed on the partition strips (11).

3. The battery pack according to claim 1, wherein a plurality of the first protrusions (131) and/or a plurality of the second protrusions (132) are discretely disposed on the partition strips (11).

4. The battery pack according to claim 1, wherein the frame body (11) is further provided with a plurality of accommodating positions for the cells (14),
the plurality of the accommodating positions for the cells (14) are arranged in a left-right side-by-side manner, and the accommodating position for the protection plate (13) is located at a rear side of the plurality of accommodating positions for the cells (14) and stretches across the plurality of the accommodating positions for the cells (14).

5. The battery pack according to claim 4, wherein a front side section of the partition strips (11) is provided with at least one communication groove (134), and the front side section is a portion of the partition strips (11) located between the accommodating position for the protection plate (13) and the plurality of the accommodating positions for the cells (14).

6. The battery pack according to claim 5, wherein the at least one communication groove (134) comprises N communication grooves (134), the plurality of the accommodating positions for the cells (14) comprise N accommodating positions for the cells (14), and the N communication grooves (134) are in one-to-one correspondence with the N accommodating positions for the cells (14), wherein N is an integer greater than 1.

7. The battery pack according to claim 5 or claim 6, wherein a portion of the front side section without the communication groove (134) is provided with the first protrusions (131).

8. The battery pack according to any one of claims 1 to 7, wherein in a case that the cover plate (2) is supported on upper surfaces of the first protrusions (131),
before welding, an upper surface of the cover plate (2) is higher than an upper end of the second protrusions (132).

9. The battery pack according to claim 8, wherein after welding, a height difference between the upper surface of the cover plate (2) and the upper end of the second protrusions (132) is less than 0.02 mm.

10. The battery pack according to any one of claims 1 to 9, wherein a longitudinal section of the first protrusions (131) is trapezoidal, and a groove (133) is provided between the first protrusions (131) and the second protrusions (132).

11. The battery pack according to any one of claims 1 to 10, wherein an edge of a rear side of the cover plate (2) is provided with a positioning strip (20) protruding downwards, and a height of the positioning strip (20) is greater than a height of the first protrusions (131); and
when the cover plate (2) is supported on an upper surface of the first protrusions (131), the positioning strip (20) abuts against and fits with an inner side of the first protrusions (131).

12. The battery pack according to any one of claims 1 to 11, wherein at least one partition groove (1311) is provided on the first protrusions (131), so that a sinking depth of the cover plate (2) after the laser welding of the frame body (1) and the cover plate (2) is limited.

13. The battery pack according to any one of claims 1 to 12, wherein on a side edge section of the partition strips (11), an embedding groove (15) is provided between the first protrusions (131) and the second protrusions (132), the side edge section is a portion of the partition strips (11) located at a left side and a right side of the accommodating position for the protection plate (13), a left side and a right side of the cover plate (2) are provided with ribs (21) in a protruding manner, and the ribs (21) fit with the embedding groove (15), and when the cover plate (2) is assembled on an upper end opening of the accommodating position for the protection plate (13), the ribs (21) are embedded into the embedding groove (15).

## Patentansprüche

1. Batteriepack, umfassend Zellen (5), eine Schutzplatine (6) und ein Batteriepackgehäuse, wobei das Batteriepackgehäuse einen Rahmenkörper (1) und eine Abdeckplatte (2) umfasst;
wobei der Rahmenkörper (1) Trennstege (11) umfasst, und der Rahmenkörper (1) mit einer durch die Trennstege (11) begrenzten Aufnahmeposition für eine Schutzplatine (13) versehen ist;
wobei die Abdeckplatte (2) an einer oberen Öffnung der Aufnahmeposition für die Schutzplatine (13) montiert ist;
wobei die Trennstege (11) an einem oberen Ende mit ersten Vorsprüngen (131) und zweiten Vorsprüngen (132) versehen sind, und die zweiten Vorsprünge (132) auf einer Außenseite der ersten Vorsprünge (131) angeordnet und höher als die ersten Vorsprünge (131) sind; und
wobei ein Rand der Abdeckplatte (2) durch die Innenseiten der zweiten Vorsprünge (132) begrenzt und auf den ersten Vorsprüngen (131) abgestützt ist, und wobei ein unteres Ende des Randes der Abdeckplatte (2) mittels Laserschweißens mit oberen Enden der ersten Vorsprünge (131) fest verbunden ist;
wobei die Schutzplatine (6) in der Aufnahmeposition für die Schutzplatine (13) angeordnet ist, die Zellen (5) in den Aufnahmeplätzen für die Zellen (14) des Batteriepackgehäuses angeordnet sind, und die Zellen (5) mit der Schutzplatine (6) elektrisch verbunden sind,
**dadurch gekennzeichnet, dass** das Batteriepack ferner ein Etikett (3) und eine Polycarbonat (PC)-Platte (4) umfasst, wobei das Etikett (3) eine Außenfläche des Batteriepackgehäuses umhüllt und die PC-Platte (4) auf einer Bodenfläche des Batteriepackgehäuses aufgeklebt ist.

2. Batteriepack nach Anspruch 1, **dadurch gekennzeichnet, dass** die ersten Vorsprünge (131) und/oder die zweiten Vorsprünge (132) durchgehend auf den Trennstegen (11) angeordnet sind.

3. Batteriepack nach Anspruch 1, **dadurch gekennzeichnet, dass** eine Mehrzahl der ersten Vorsprünge (131) und/oder eine Mehrzahl der zweiten Vorsprünge (132) diskret auf den Trennstegen (11) angeordnet sind.

4. Batteriepack nach Anspruch 1, **dadurch gekennzeichnet, dass** der Rahmenkörper (1) ferner mit mehreren Aufnahmepositionen für die Zellen (14) versehen ist,
wobei die mehreren Aufnahmepositionen für die Zellen (14) nebeneinander in links-rechter Richtung angeordnet sind, und die Aufnahmeposition für die Schutzplatine (13) auf einer Rückseite der mehreren Aufnahmepositionen für die Zellen (14) angeordnet ist und sich über die Mehrzahl der Aufnahmeplätze für die Zellen (14) erstreckt.

5. Batteriepack nach Anspruch 4, **dadurch gekennzeichnet, dass** ein vorderseitiger Bereich der Trennstege (11) mit mindestens einer Verbindungsnut (134) versehen ist, wobei der vorderseitige Bereich ein Abschnitt der Trennstege (11) ist, der sich zwischen der Aufnahmeposition für die Schutzplatine (13) und den mehreren Aufnahmepositionen für die Zellen (14) befindet.

6. Batteriepack nach Anspruch 5, **dadurch gekennzeichnet, dass** die mindestens eine Verbindungsnut (134) N Verbindungsnuten (134) umfasst, die Mehrzahl der Aufnahmeplätze für die Zellen (14) N Aufnahmeplätze für die Zellen (14) umfasst, und die N Verbindungsnuten (134) in Eins-zu-eins-Entsprechung mit den N Aufnahmeplätzen für die Zellen (14) stehen, wobei N eine ganze Zahl größer als 1 ist.

7. Batteriepack nach Anspruch 5 oder 6, **dadurch gekennzeichnet, dass** ein Abschnitt des vorderseitigen Bereichs ohne die Verbindungsnut (134) mit den ersten Vorsprüngen (131) versehen ist.

8. Batteriepack nach einem der Ansprüche 1 bis 7, **dadurch gekennzeichnet, dass** in einem Fall, in dem die Abdeckplatte (2) auf oberen Flächen der ersten Vorsprünge (131) abgestützt ist, vor dem Schweißen eine obere Fläche der Abdeckplatte (2) höher ist als ein oberes Ende der zweiten Vorsprünge (132).

9. Batteriepack nach Anspruch 8, **dadurch gekennzeichnet, dass** nach dem Schweißen ein Höhenunterschied zwischen der oberen Fläche der Abdeckplatte (2) und dem oberen Ende der zweiten Vorsprünge (132) weniger als 0,02 mm beträgt.

10. Batteriepack nach einem der Ansprüche 1 bis 9, **dadurch gekennzeichnet, dass** ein Längsschnitt der ersten Vorsprünge (131) trapezförmig ist, und eine Rille (133) zwischen den ersten Vorsprüngen (131) und den zweiten Vorsprüngen (132) angeordnet ist.

11. Batteriepack nach einem der Ansprüche 1 bis 10, **dadurch gekennzeichnet, dass** ein hinterer Rand der Abdeckplatte (2) mit einem nach unten vorspringenden Positionierstreif (20) versehen ist, und eine Höhe des Positionierstreifs (20) größer ist als eine Höhe der ersten Vorsprünge (131); und wobei, wenn die Abdeckplatte (2) auf einer oberen Fläche der ersten Vorsprünge (131) abgestützt ist, der Positionierstreif (20) an einer Innenseite der ersten Vorsprünge (131) anliegt und mit der Innenseite formschlüssig zusammenpasst.

12. Batteriepack nach einem der Ansprüche 1 bis 11, **dadurch gekennzeichnet, dass** mindestens eine Trennnut (1311) auf den ersten Vorsprüngen (131) angeordnet ist, sodass eine Einsinktiefe der Abdeckplatte (2) nach dem Laserschweißen des Rahmenkörpers (1) und der Abdeckplatte (2) begrenzt wird.

13. Batteriepack nach einem der Ansprüche 1 bis 12, **dadurch gekennzeichnet, dass** an einem Seitenrandbereich der Trennstege (11) eine Einbettungsnut (15) zwischen den ersten Vorsprüngen (131) und den zweiten Vorsprüngen (132) angeordnet ist, wobei der Seitenrandbereich ein Abschnitt der Trennstege (11) ist, der sich an einer linken Seite und einer rechten Seite der Aufnahmeposition für die Schutzplatine (13) befindet,
wobei ein linkes Ende und ein rechtes Ende der Abdeckplatte (2) vorstehend mit Rippen (21) versehen sind, die mit der Einbettungsnut (15) zusammenpassen, und wobei, wenn die Abdeckplatte (2) an einer oberen Öffnung der Aufnahmeposition für die Schutzplatine (13) montiert ist, die Rippen (21) in die Einbettungsnut (15) eingepasst sind.

## Revendications

1. Un bloc-batterie, comprenant des cellules (5), une plaque de protection (6) et un boîtier de bloc-batterie, où le boîtier de bloc-batterie comprend un corps de châssis (1) et une plaque de recouvrement (2),
le corps de châssis (1) comprend des bandes de séparation (11), et le corps de châssis (1) est pourvu d'une position de logement pour une plaque de protection (13) définie par les bandes de séparation (11) ;
la plaque de recouvrement (2) est assemblée sur une ouverture supérieure de la position de logement pour la plaque de protection (13) ;
les bandes de séparation (11) sont pourvues de premières saillies (131) et de deuxièmes saillies (132) au niveau d'une extrémité supérieure de celles-ci, et les deuxièmes saillies (132) sont situées sur un côté externe des premières saillies (131) et sont plus hautes que les premières saillies (131) ; et
un bord de la plaque de recouvrement (2) est limité à des côtés internes des deuxièmes saillies (132) et est supporté sur les premières saillies (131), et une extrémité inférieure du bord de la plaque de recouvrement (2) est reliée de manière fixe à des extrémités supérieures des premières saillies (131) au moyen d'un soudage au laser ;
la plaque de protection (6) est disposée dans la position de logement pour la plaque de protection (13), les cellules (5) sont disposées dans les positions de logement pour les cellules (14) du boîtier de bloc-batterie, et les cellules (5) sont reliées électriquement à la plaque de protection (6) ; **caractérisé en ce que**,
le bloc-batterie comprend en outre une étiquette (3) et une feuille de polycarbonate (PC) (4), l'étiquette (3) enveloppe une surface externe du boîtier de bloc-batterie, et la feuille de PC (4) est collée à une surface de dessous du boîtier de bloc-batterie.

2. Le bloc-batterie selon la revendication 1, où les premières saillies (131) et/ou les deuxièmes saillies (132) sont disposées de manière continue sur les bandes de séparation (11).

3. Le bloc-batterie selon la revendication 1, où une pluralité des premières saillies (131) et/ou une pluralité des deuxièmes saillies (132) sont disposées de manière distincte sur les bandes de séparation (11).

4. Le bloc-batterie selon la revendication 1, où le corps de châssis (11) est en outre pourvu d'une pluralité de positions de logement pour les cellules (14),
la pluralité des positions de logement pour les cellules (14) sont agencées d'une manière côte à côte gauche-droite, et la position de logement pour la plaque de protection (13) est située au niveau d'un côté arrière de la pluralité de positions de logement pour les cellules (14) et s'étend sur toute la pluralité des positions de logement pour les cellules (14).

5. Le bloc-batterie selon la revendication 4, où une section de côté avant des bandes de séparation (11) est pourvue d'au moins une rainure de communication (134), et la section de côté avant est une partie des bandes de séparation (11) située entre la position de logement pour la plaque de protection (13) et la pluralité des positions de logement pour les cellules (14).

6. Le bloc-batterie selon la revendication 5, où l'au moins une rainure de communication (134) comprend N rainures de communication (134), la pluralité des positions de logement pour les cellules (14) comprennent N positions de logement pour les cellules (14), et les N rainures de communication (134) sont en correspondance biunivoque avec les N positions de logement pour les cellules (14), où N est un entier supérieur à 1.

7. Le bloc-batterie selon la revendication 5 ou la revendication 6, où une partie de la section de côté avant sans la rainure de communication (134) est pourvue des premières saillies (131).

8. Le bloc-batterie selon l'une quelconque des revendications 1 à 7, où, dans le cas où la plaque de recouvrement (2) est supportée sur des surfaces supérieures des premières saillies (131),
avant le soudage, une surface supérieure de la plaque de recouvrement (2) est plus haute qu'une extrémité supérieure des deuxièmes saillies (132).

9. Le bloc-batterie selon la revendication 8, où, après le soudage, une différence de hauteur entre la surface supérieure de la plaque de recouvrement (2) et l'extrémité supérieure des deuxièmes saillies (132) est inférieure à 0,02 mm.

10. Le bloc-batterie selon l'une quelconque des revendications 1 à 9, où une section longitudinale des premières saillies (131) est trapézoïdale, et une rainure (133) est prévue entre les premières saillies (131) et les deuxièmes saillies (132).

11. Le bloc-batterie selon l'une quelconque des revendications 1 à 10, où un bord d'un côté arrière de la plaque de recouvrement (2) est pourvu d'une bande de positionnement (20) faisant saillie vers le bas, et une hauteur de la bande de positionnement (20) est supérieure à une hauteur des premières saillies (131) ; et
lorsque la plaque de recouvrement (2) est supportée sur une surface supérieure des premières saillies (131), la bande de positionnement (20) vient en butée contre, et s'ajuste avec, un côté interne des premières saillies (131).

12. Le bloc-batterie selon l'une quelconque des revendications 1 à 11, où au moins une rainure de séparation (1311) est prévue sur les premières saillies (131), de sorte qu'une profondeur d'enfoncement de la plaque de recouvrement (2) après le soudage au laser du corps de châssis (1) et de la plaque de recouvrement (2) est limitée.

13. Le bloc-batterie selon l'une quelconque des revendications 1 à 12, où, sur une section de bord latéral des bandes de séparation (11), une rainure d'encastrement (15) est prévue entre les premières saillies (131) et les deuxièmes saillies (132), la section de bord latéral est une partie des bandes de séparation (11) située au niveau d'un côté gauche et d'un côté droit de la position de logement pour la plaque de protection (13), un côté gauche et un côté droit de la plaque de recouvrement (2) sont pourvus d'ailettes (21) de manière saillante, et les ailettes (21) s'ajustent avec la rainure d'encastrement (15), et lorsque la plaque de recouvrement (2) est assemblée sur une ouverture d'extrémité supérieure de la position de logement pour la plaque de protection (13), les ailettes (21) sont encastrées dans la rainure d'encastrement (15).
